# EUROPEAN PATENT APPLICATION

(11) **EP 3 610 718 A1**
(43) Date of publication of application: **19.02.2020**
(21) Application number: 19190725.2
(22) Date of filing: 08.08.2019
(51) Int. Cl.: A01G 3/053

(54) **HEDGE TRIMMER**

(30) Priority: 13.08.2018 JP 2018152529
(71) Applicant: Yamabiko Corporation, Ohme-shi Tokyo 198-8760 (JP)
(72) Inventor: SHIMIZU, Kunio, Ohme-Shi, Tokyo 198-8760 (JP); KODAMA, Hisao, Ohme-shi, Tokyo 198-8760 (JP)
(74) Representative: Dietz, Christopher Friedrich

(57) **Abstract**

A hedge trimmer capable of effectively increasing the rigidity of a cutter assembly as well as reducing its weight, and easily adjusting the clearance for sliding of cutters, thereby improving the operability and addressing degradation of the cutting performance of the cutters. In the cutter assembly 20, upper and lower cutter supports 31 and 32 are provided with a plurality of clamping portions 40 at predetermined intervals for increasing the rigidity, each clamping portion 40 having a square tube-like spacer 44 and a first bolt 45. In addition, at least one adjusting portion 50 having a second bolt 52 for adjusting the separation distance between the upper and lower cutter supports 31 and 32 is provided between adjacent clamping portions 40.

## Description

### BACKGROUND

### Technical Field

The present disclosure relates to a hedge trimmer adapted to perform trimming or pruning such that its elongated upper and lower cutters are reciprocated in relatively opposite directions with respect to each other along the longitudinal direction, with their cutting edges rubbed against each other.

### Background Art

As hedge trimmers, the one including a body housing with a drive source disposed therein, and an open-sided elongated cutter assembly supported by the body housing at its proximal end is known. The cutter assembly includes a pair of upper and lower cutters and a pair of upper and lower plate-like cutter supports, the pair of upper and lower cutters having elongated substrates with their proximal ends positioned on the body housing, the elongated substrates being adapted to reciprocate in relatively opposite directions with respect to each other along the longitudinal direction, and the pair of upper and lower plate-like cutter supports being integrated respectively in the longitudinal direction and extending respectively in the longitudinal direction so as to sandwich the upper and lower cutters therebetween partially or entirely across their lengths, to guide reciprocating relative motions of the upper and lower cutters while supporting them. Such a hedge trimmer is adapted to perform trimming or pruning with projecting cutting edges, which are provided at predetermined intervals on the elongated substrates of the upper and lower cutters, rubbed against each other.

In some of such hedge trimmers, as disclosed in Patent Literature 1, for example, for the purpose of securing a clearance for sliding of the upper and lower cutters, the cutter assembly is provided with a plurality of clamping portions, each clamping portion including a bolt to be screwed in the thickness direction of the upper and lower cutter supports, and a tube-like spacer.

Specifically, for the purpose of securing a clearance for sliding of the upper and lower cutters, that is, maintaining the separation distance between the upper and lower cutter supports greater than the total thickness of the upper and lower cutters, each clamping portion includes the tube-like spacer and the bolt, the tube-like spacer being adapted to be relatively slidably fitted and inserted into a slotted hole provided in each of the upper and lower cutters so as to be interposed between the upper and lower cutter supports, and the bolt being adapted to be inserted from one side of the upper and lower cutter supports, pass through the tube-like spacer fitted and inserted into the slotted holes, and be screwed into a screw portion (for example, an internal thread portion or nut) provided on the other side of the upper and lower cutter supports so as to securely fasten the upper and lower cutter supports to the tube-like spacer.

As described above, when the cutter assembly is provided with clamping portions each including a bolt and a tube-like spacer, the upper and lower cutter supports are integrated by means of the tube-like spacers, so that the clamping portions function like knots of bamboos, thereby allowing to increase the rigidity of the cutter assembly as well as to reduce its weight.

Meanwhile, in the hedge trimmer as described above, since the upper and lower cutters are reciprocated in relatively opposite directions with respect to each other along the longitudinal direction, the cutters (and their portions in sliding contact with each other) are worn out in the thickness direction as the hedge trimmer is used for a longer period of time, which in turn can excessively widen the clearance for sliding of the upper and lower cutters. As a result, the cutting performance of the cutters may be degraded.

Therefore, as disclosed in Patent Literature 2, for example, some conventional hedge trimmers are provided with an adjusting portion including bolts for adjusting (typically narrowing) the clearance for sliding of the upper and lower cutters, or the separation distance between upper and lower holding members (cutter supports, washers), the bolts being adapted to be inserted from one side of the upper and lower holding members that sandwich the cutters therebetween, pass through slotted holes provided in the cutters, and be screwed into screw portions (for example, internal thread portions or nuts) provided on the other side of the upper and lower holding members.

### Citation List

### Patent Literature

Patent Literature 1: JP H7-24022 U
Patent Literature 2: JP 4757784 B2

### SUMMARY

As in the hedge trimmer disclosed in Patent Literature 1, when the cutter assembly including the upper and lower cutters and the upper and lower cutter supports is provided with clamping portions each including a bolt and a tube-like spacer, the clamping portions function like knots of bamboos, thereby allowing to increase the rigidity of the cutter assembly as well as to reduce its weight.

However, in such a hedge trimmer, since the tube-like spacer is provided in each clamping portion, when the cutters are worn out in the thickness direction, the clearance (or the separation distance between the upper and lower cutter supports) for sliding of the cutters cannot be adjusted. Therefore, degradation of the cutting performance of the cutters cannot be addressed.

Meanwhile, in the hedge trimmer disclosed in Patent Literature 2, the cutter assembly is provided with the adjusting portion for adjusting the clearance for sliding of the cutters, and further, the clamping portions (lateral direction regulating units that are structured similarly to the clamping portions), each including the bolt and the tube-like spacer (a collar), are provided on the proximal and distal end sides with the adjusting portion disposed therebetween.

However, in such a hedge trimmer, the lower cutter support is short and is only provided on the proximal end side, and the clamping portion is not provided on the middle portion in the longitudinal direction. Further, of the upper and lower holding members, the lower holding member of the clamping portion on the distal end side is a washer. Thus, the clamping portion does not function like a knot of a bamboo, resulting in insufficient rigidity of the cutter assembly, thereby causing the cutter assembly to largely bend during trimming operation. Therefore, the operability of such a hedge trimmer is not excellent.

The present disclosure has been made in view of the foregoing, and provides a hedge trimmer that is capable of effectively increasing the rigidity of the cutter assembly as well as reducing its weight, and easily adjusting the clearance for sliding of the cutters, thereby improving the operability and addressing degradation of the cutting performance of the cutters.

In view of the foregoing, a hedge trimmer according to an embodiment of the present disclosure includes a cutter assembly including upper and lower cutters and upper and lower plate-like cutter supports, the upper and lower cutters having elongated substrates with their proximal ends positioned on a body housing with a drive source disposed therein, the elongated substrates being adapted to reciprocate in relatively opposite directions with respect to each other along the longitudinal direction, and the upper and lower plate-like cutter supports being integrated respectively in the longitudinal direction and extending respectively in the longitudinal direction so as to sandwich the upper and lower cutters therebetween to guide reciprocating relative motions of the upper and lower cutters while supporting them, in which projecting cutting edges provided at intervals on the elongated substrates of the upper and lower cutters are adapted to rub against each other, and for the purpose of securing a separation between the upper and lower cutter supports, a plurality of clamping portions, each having a spacer and a first bolt, are provided at intervals on the upper and lower cutter supports of the cutter assembly, the spacer being adapted to be relatively slidably fitted and inserted into first slotted holes provided in the cutters so as to be interposed between the upper and lower cutter supports, and the first bolt being adapted to be inserted from one side of the upper and lower cutter supports, pass through the spacer fitted and inserted into the first slotted holes, and be screwed into a screw portion provided on the other side of the upper and lower cutter supports so as to securely fasten the upper and lower cutter supports to the spacer, and at least one adjusting portion is provided between the adjacent clamping portions, the adjusting portion having a second bolt, the second bolt being adapted to be inserted from one side of the upper and lower cutter supports, pass through second slotted holes provided in the cutters, and be screwed into a screw portion on the other side of the upper and lower cutter supports so as to adjust the separation distance between the upper and lower cutter supports.

In some embodiments, in the cutter supports of the cutter assembly, when a portion between the cutting edge closest to the proximal end and the cutting edge closest to the distal end is seen as divided roughly equally in half into a proximal half portion and a distal half portion, the number of the adjusting portions relative to that of the clamping portions is greater in the distal half portion than in the proximal half portion.

In some embodiments, in the cutter supports of the cutter assembly, when the portion between the cutting edge closest to the proximal end and the cutting edge closest to the distal end is seen as divided roughly equally in half into the proximal half portion and the distal half portion, a distance between the adjacent clamping portions with the adjusting portion interposed therebetween is greater in the distal half portion than in the proximal half portion or is greater in the distal half portion than a distance between the adjacent clamping portions with no adjusting portion interposed therebetween.

In some embodiments, in the cutter supports of the cutter assembly, when the portion between the cutting edge closest to the proximal end and the cutting edge closest to the distal end is seen as divided roughly equally into three portions, which include front, middle, and rear portions in this order from the distal end to the proximal end, the adjusting portion is provided on the middle portion.

In some embodiments, in the cutter supports of the cutter assembly, when the portion between the cutting edge closest to the proximal end and the cutting edge closest to the distal end is seen as divided roughly equally into three portions, which include front, middle, and rear portions in this order from the distal end to the proximal end, the adjusting portion is provided on the front portion.

A hedge trimmer according to another embodiment of the present disclosure includes a cutter assembly including upper and lower cutters and upper and lower plate-like cutter supports, the upper and lower cutters having elongated substrates with their proximal ends positioned on a body housing with a drive source disposed therein, the elongated substrates being adapted to reciprocate in relatively opposite directions with respect to each other along the longitudinal direction, and the upper and lower plate-like cutter supports being integrated respectively in the longitudinal direction and extending respectively in the longitudinal direction so as to sandwich the upper and lower cutters therebetween to guide reciprocating relative motions of the upper and lower cutters while supporting them, in which projecting cutting edges provided at intervals on the elongated substrates of the upper and lower cutters are adapted to rub against each other, and for the purpose of securing a separation distance between the upper and lower cutter supports, the cutter assembly is provided with a clamping portion having a spacer and a first bolt, the spacer being adapted to be relatively slidably fitted and inserted into the first slotted holes provided in the cutters so as to be interposed between the upper and lower cutter supports, and the first bolt being adapted to be inserted from one side of the upper and lower cutter supports, pass through the spacer fitted and inserted into the first slotted holes, and be screwed into a screw portion provided on the other side of the upper and lower cutter supports so as to securely fasten the upper and lower cutter supports to the spacer, and an adjusting portion having a second bolt, the second bolt being adapted to be inserted from one side of the upper and lower cutter supports, pass through second slotted holes provided in the cutters, and be screwed into a screw portion on the other side of the upper and lower cutter supports so as to adjust the separation distance between the upper and lower cutter supports, and in the cutter supports of the cutter assembly, when a portion between the cutting edge closest to the proximal end and the cutting edge closest to the distal end is seen as divided roughly equally in half into a proximal half portion and a distal half portion, the number of the adjusting portions relative to that of the clamping portions is greater in the distal half portion than in the proximal half portion.

In some embodiments, in the cutter supports of the cutter assembly, when the portion between the cutting edge closest to the proximal end and the cutting edge closest to the distal end is seen as divided roughly equally into three portions, which include front, middle, and rear portions in this order from the distal end to the proximal end, the clamping portion and the adjusting portion are provided on the middle portion.

In some embodiments, in the cutter supports of the cutter assembly, when the portion between the cutting edge closest to the proximal end and the cutting edge closest to the distal end is seen as divided roughly equally into three portions, which include front, middle, and rear portions in this order from the distal end to the proximal end, the number of the adjusting portions relative to that of the clamping portions is greater in the front portion than in the rear portion.

In some embodiments, one of the upper and lower cutters is immovably secured to the corresponding one of the upper and lower cutter supports.

In some embodiments, one of the upper and lower cutters is integrally formed with the corresponding one of the upper and lower cutter supports.

In some embodiments, the upper and lower cutter supports are integrated respectively in the longitudinal direction and extending respectively in the longitudinal direction so as to cover the upper and lower cutters substantially entirely across the lengths of the upper and lower cutters.

In the hedge trimmer according to the present disclosure, since the cutter assembly is provided with the clamping portions, the upper and lower cutter supports are integrated by means of the spacers, so that the clamping portions function like knots of bamboos, thereby allowing to increase the rigidity of the cutter assembly as well as to reduce its weight. Thus, undesired bending during trimming operation can be suppressed, thereby improving the operability.

Further, in some embodiments, since the adjusting portion is provided between the adjacent clamping portions, when the upper and lower cutters are worn out in the thickness direction, widening the clearance for sliding of the upper and lower cutters excessively, and thus degrading the cutting performance of the cutters, it is only necessary to fasten the second bolt of the adjusting portion so as to deform the cutter supports, thereby reducing the separation distance between them. In that case, the second bolt or a lock nut of the adjusting portion only needs to be fastened without disassembling the cutter assembly. Therefore, the adjustment of the separation distance between the upper and lower cutter supports is simplified, thereby improving the operational efficiency and convenience.

Furthermore, when the portion between the cutting edge closest to the proximal end and the cutting edge closest to the distal end is seen as divided roughly equally into three portions, the middle portion, in particular, is required to have both increased rigidity and capability of adjusting the separation distance between the cutter supports. In the cutter assembly of the hedge trimmer of the present disclosure, to address such requirements, both the clamping and adjusting portions may be provided on the middle portion.

Moreover, typically, as the cutters are worn out more heavily toward the distal end, the separation distance between the cutter supports is required to be more significantly reduced toward the distal end, while the proximal end side is required to have higher rigidity because insufficient rigidity on the proximal end side may likely cause undesirably large bending. In the cutter assembly of the hedge trimmer of the present disclosure, the proximal end side may be provided with more clamping portions, while the distal end side may be provided with more adjusting portions. Therefore, the aforementioned requirements can be satisfied. Further, in some embodiments, the distance between the adjacent clamping portions is reduced on the proximal end side to increase the rigidity, while the distance between the adjacent clamping portions is increased on the distal end side to mitigate the deformation of the cutter supports when the separation distance is adjusted. Thus, the aforementioned requirements can be satisfied.

### BRIEF DESCRIPTION OF THE DRAWINGS

FIG. 1 is a perspective view illustrating a cutter assembly of an embodiment of a hedge trimmer according to the present disclosure;
FIG. 2 is an exploded perspective view of the cutter assembly of FIG. 1;
FIGS. 3A and 3B are a top view and a bottom view of the cutter assembly of FIG. 1, respectively;
FIG. 4A is an enlarged cross-sectional view of the cutter assembly taken along line A-A of FIG. 3A and FIG. 4B is an enlarged cross-sectional view of the cutter assembly taken along line B-B of FIG. 3A;
FIG. 5 is a side view of the cutter assembly of FIG. 1;
FIG. 6A is an enlarged cross-sectional view of the cutter assembly taken along line C-C of FIG. 5 and FIG. 6B is an enlarged cross-sectional view of the cutter assembly taken along line D-D of FIG. 5;
FIG. 7 is an enlarged cross-sectional view of the cutter assembly taken along line E-E of FIG. 5;
FIG. 8 is a partial enlarged side view that exaggeratedly shows the cutter assembly with a clearance for sliding of the cutters adjusted after the cutters are worn out in the thickness direction;
FIG. 9 is a bottom view of an example of the cutter assembly including a first bolt of a clamping portion and a second bolt of an adjusting portion that have different head shapes; and
FIGS. 10A, 10B, and 10C are top views illustrating arrangement examples of the clamping portions and the adjusting portions of the cutter assembly.

### DETAILED DESCRIPTION

An embodiment of the present disclosure will be described below with reference to the drawings.

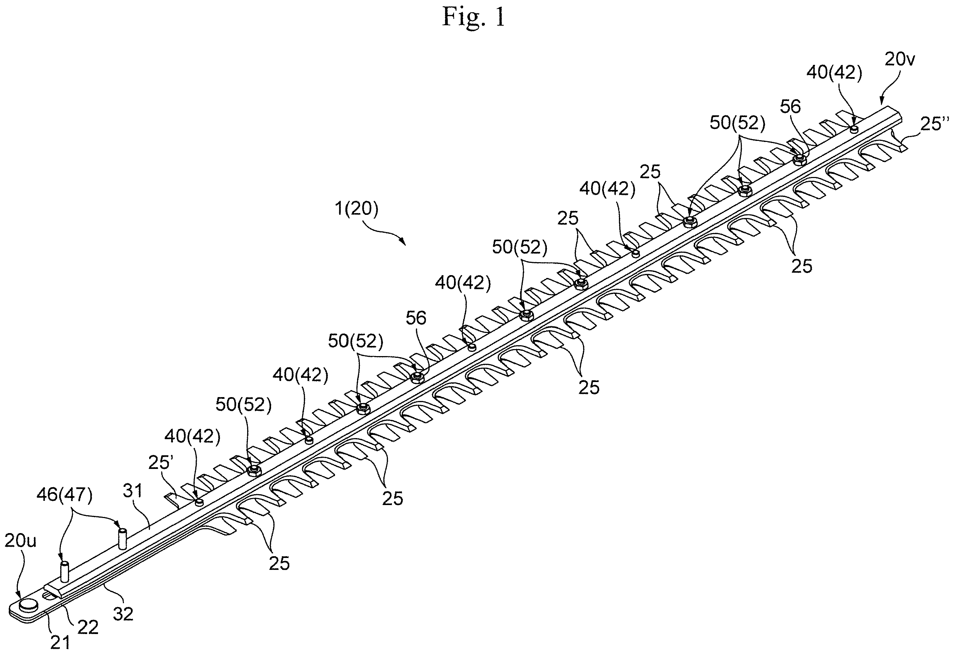

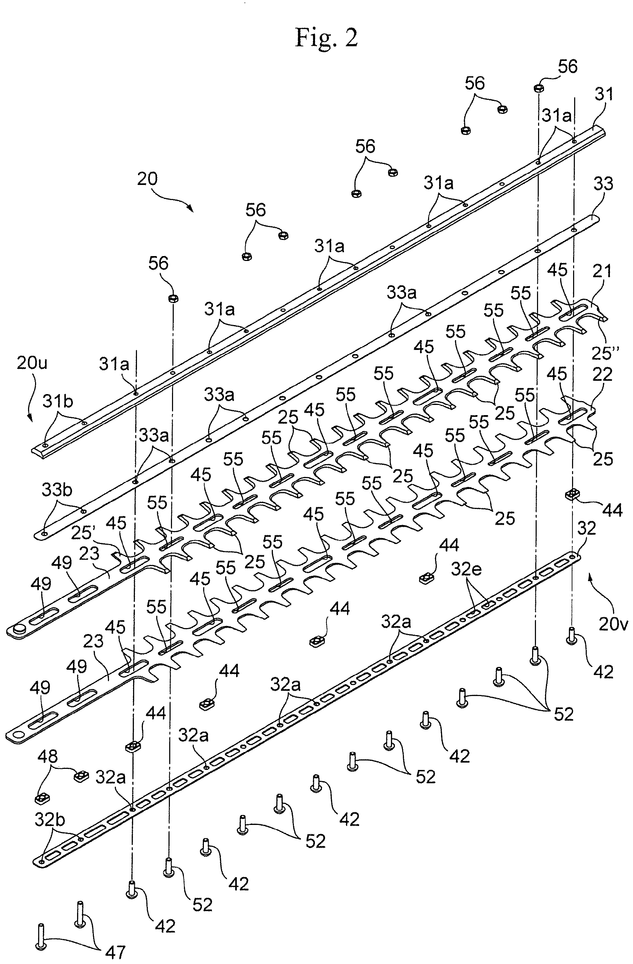

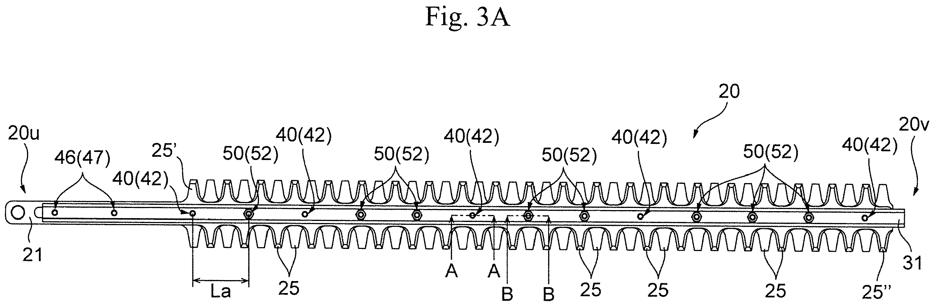

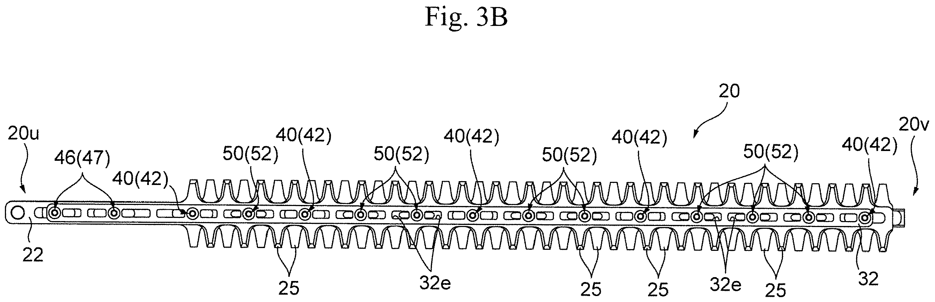

FIG. 1 is a perspective view illustrating a cutter assembly of an embodiment of a hedge trimmer according to the present disclosure, FIG. 2 is an exploded perspective view of the cutter assembly of FIG. 1, and FIGS. 3A and 3B are a top view and a bottom view of the cutter assembly of FIG. 1, respectively.

Similarly to the inventions described in Patent Literature 1 and Patent Literature 2, a hedge trimmer 1 of the present embodiment, whose entire view is not shown herein, includes a body housing, which has disposed therein a drive source, gear unit, a front or rear handle with operation levers, and the like; and an open-sided elongated cutter assembly 20 supported by the body housing at its proximal end 20u.

The cutter assembly 20 includes a pair of upper and lower cutters 21 and 22 in (relatively) sliding contact with each other, and a pair of upper and lower plate-like cutter supports 31 and 32 that are integrated respectively in the longitudinal direction and extend respectively in the longitudinal direction so as to sandwich the upper and lower cutters 21 and 22 therebetween substantially entirely across their lengths to guide reciprocating relative motions of the upper and lower cutters 21 and 22 while supporting them.

More specifically, the pair of upper and lower cutters 21 and 22 have elongated substrates 23 with their proximal ends 20u positioned on the body housing, the elongated substrates 23 being adapted to reciprocate in relatively opposite directions with respect to each other along the longitudinal direction. Each elongated substrate 23 is provided, at its proximal end 20u, with two proximal-end slotted holes 49 for attachment and support at a predetermined interval in the longitudinal direction, each proximal-end slotted hole 49 being relatively wide and having a predetermined length. Further, the elongated substrates 23 are provided with cutting edges 25 projecting alternately on the left and right sides thereof at predetermined intervals in the longitudinal direction, in portions forward of the proximal ends 20u of the elongated substrates 23. Hedge trimming or pruning is performed with the cutting edges 25 rubbed against each other.

In a portion of each of the upper and lower cutters 21 and 22 where the cutting edges 25 are provided, that is, a portion between a cutting edge 25' (referred to as a rear-end cutting edge 25') closest to the proximal end 20u and a cutting edge 25" (referred to as a front-end cutting edge 25") closest to a distal end 20v, relatively wide first slotted holes 45 and relatively narrow second slotted holes 55 are formed in a predetermined arrangement pattern (which will be described later). The proximal-end slotted holes 49 and first slotted holes 45 have the same width. Further, the proximal-end slotted holes 49, first slotted holes 45, and second slotted holes 55 each have a length that allows for reciprocating relative motions of the pair of upper and lower cutters 21 and 22. Herein, all the slotted holes have the same length.

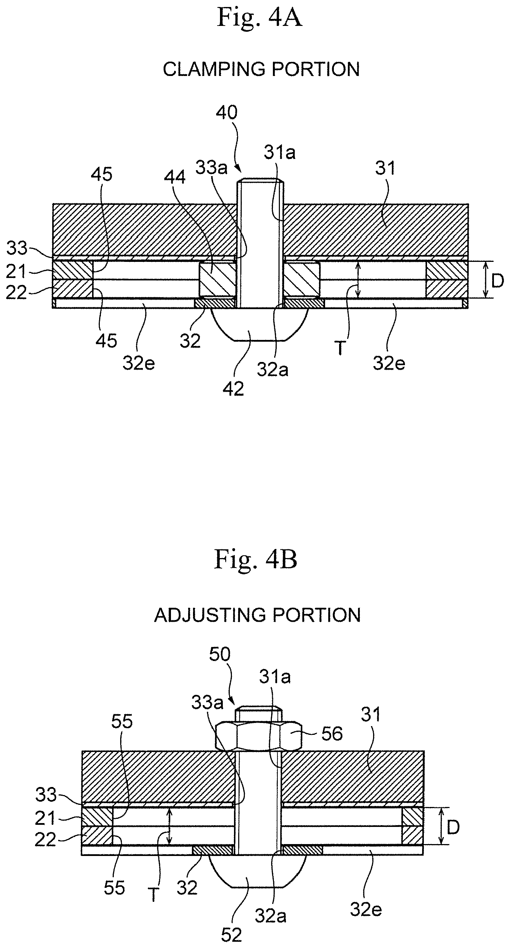

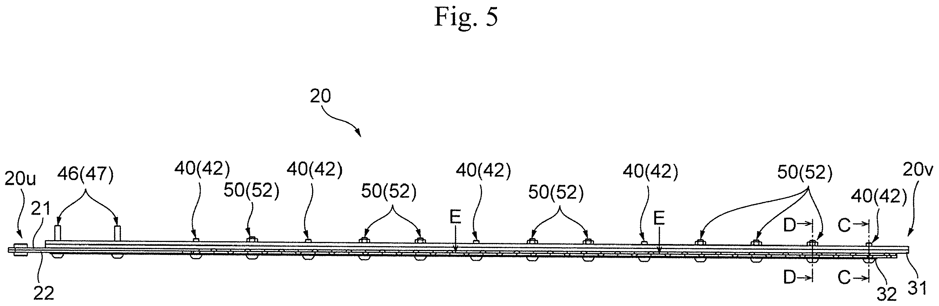

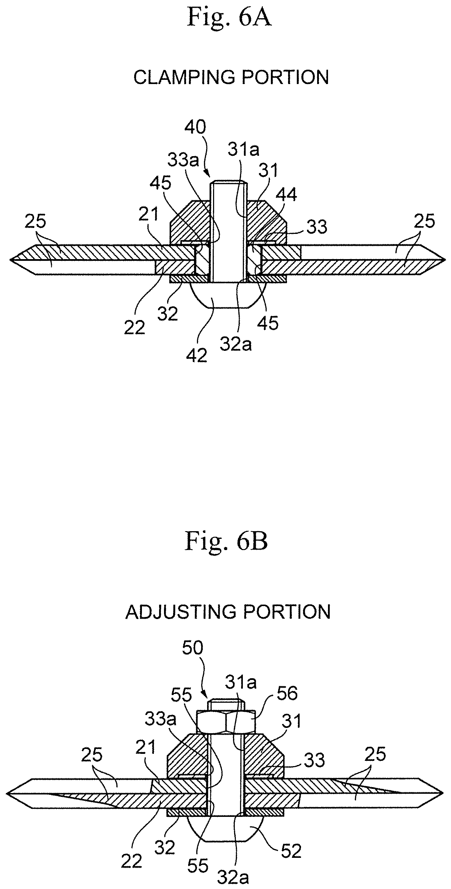

The upper cutter support 31 is made of light metal, such as aluminum, for weight reduction, and is formed in a relatively thick plate having a trapezoid cross section as shown in FIG. 4A to FIG. 6B. The upper cutter support 31 is provided with two internal thread portions 31b at its proximal end 20u, the two internal thread portions 31b corresponding to the two proximal-end slotted holes 49 for attachment and support. Further, in the portion between the rear-end cutting edge 25' and the front-end cutting edge 25" of the upper cutter support 31, a predetermined number of internal thread portions 31a (herein, 13 internal thread portions 31a) are provided at given intervals La in the longitudinal direction. The upper cutter support 31 is further provided with a bearing liner 33 securely fitted onto its underside. The bearing liner 33 has formed therein through-holes 33b and 33a at positions corresponding to the internal thread portions 31b and 31a, respectively.

Meanwhile, the lower cutter support 32 is made of a relatively thin sheet metal for weight reduction and easy deformation. The lower cutter support 32 has formed therein through-holes 32b and 32a at positions corresponding to the internal thread portions 31b and 31a of the upper cutter support 31, respectively. Further, in portions between the adjacent through-holes 32b and between the adjacent through-holes 32a, lightening holes 32e are provided for weight reduction, as appropriate.

In the cutter assembly 20 including the upper and lower cutters 21 and 22 and the cutter supports 31 and 32 of the present embodiment, two clamping portions 46 for attachment (which will be described later) are provided at the proximal end 20u, and clamping portions 40 and adjusting portions 50, which are 13 in total, are equidistantly provided at the intervals La in a predetermined arrangement pattern in the portion between the rear-end cutting edge 25' and the front-end cutting edge 25" forward of the proximal end 20u.

For the purpose of securing a clearance for sliding of the upper and lower cutters 21 and 22, that is, maintaining the separation distance D between the upper cutter support 31 (or the bearing liner 33) and the lower cutter support 32 greater than the total thickness T of the upper and lower cutters 21 and 22 (which means D > T), as shown in FIG. 4A, each clamping portion 40 includes a square tube-like spacer 44 and a first bolt 42, the square tube-like spacer 44 being in a rectangular shape as seen in plan view and having a round insertion hole and being adapted to be relatively slidably fitted and inserted into the first slotted holes 45 provided in the upper and lower cutters 21 and 22 so as to be interposed between the upper and lower cutter supports 31 and 32, and the first bolt 42 being adapted to be inserted from the side of the lower cutter support 32, pass through the through-hole 32a, the round insertion hole of the square tube-like spacer 44 fitted and inserted into the first slotted holes 45, and the through-hole 33a, and be screwed into the internal thread portion 31a provided in the upper cutter support 31 so as to securely fasten the upper and lower cutter supports 31 and 32 to the square tube-like spacer 44.

Meanwhile, each adjusting portion 50 includes a second bolt 52 that is adapted to be inserted from the side of the lower cutter support 32, pass through the through-hole 32a, the second slotted holes 55 provided in the upper and lower cutters 21 and 22, and the through-hole 33a, and be screwed into the internal thread portion 31a provided in the upper cutter support 31 so as to adjust the separation distance D between the upper and lower cutter supports 31 and 32. The second bolt 52 projects upward beyond the internal thread portion 31a provided in the upper cutter support 31 and has a lock nut 56 screwed into the projecting portion thereof. This provides a so-called a double nut effect, which prevents the second bolt 52 from loosening when the separation distance D between the upper and lower cutter supports 31 and 32 is adjusted.

Further, the two clamping portions 46 for attachment provided at the proximal end 20u are adapted to attach the proximal end 20u of the open-sided cutter assembly 20 to the body housing such that the cutter assembly 20 is supported at one end on the body housing. Similarly to the aforementioned clamping portion 40, for the purpose of securing a clearance for sliding of the upper and lower cutters 21 and 22, that is, maintaining the separation distance D between the upper and lower cutter supports 31 and 32 greater than the total thickness T of the upper and lower cutters 21 and 22 (which means D > T), each clamping portion 46 includes a square tube-like spacer 48 and a relatively long proximal-end bolt 47, the square tube-like spacer 48 being in a rectangular shape as seen in plan view and being adapted to be relatively slidably fitted and inserted into the two proximal-end slotted holes 49 provided in the upper and lower cutters 21 and 22 so as to be interposed between the upper and lower cutter supports 31 and 32, and the proximal-end bolt 47 being adapted to be inserted from the side of the lower cutter support 32, pass through the through-hole 32b, the square tube-like spacer 48 fitted and inserted into the proximal end holes 49, and the through-hole 33b, and be screwed into the internal thread portion 31b provided in the upper cutter support 31 so as to securely fasten the proximal ends 20u of the upper and lower cutter supports 31 and 32 to the square tube-like spacer 48.

Next, an arrangement pattern of the clamping portions 40 and the adjusting portions 50 of the aforementioned cutter assembly 20 will be described. In the cutter assembly 20 of the present embodiment, the clamping portions 40 and the adjusting portions 50 are disposed in the portion between the rear-end cutting edge 25' and the front-end cutting edge 25" forward of the proximal end 20u, such that one clamping portion 40, one adjusting portion 50, one clamping portion 40, two adjusting portions 50, one clamping portion 40, two adjusting portions 50, one clamping portion 40, three adjusting portions 50, and one clamping portion 40 are arranged in this order from the rear-end cutting edge 25' toward the front-end cutting edge 25" in the longitudinal direction.

More specifically, one adjusting portion 50 is provided between the first adjacent clamping portions 40, which are the closest to the proximal end 20u (or the rear-end cutting edge 25'), two adjusting portions 50 are provided between the second adjacent clamping portions 40 and between the third adjacent clamping portions 40, and three adjusting portions 50 are provided between the fourth adjacent clamping portions 40, which are the closest to the distal end 20v (or distal-end cutting edge 25").

In other words, the proximal end 20u side is provided with more clamping portions 40, while the distal end 20v side is provided with more adjusting portions 50. Further, when the portion between the rear-end cutting edge 25' closest to the proximal end and the front-end cutting edge 25" closest to the distal end is seen as divided roughly equally in half into a proximal half portion and a distal half portion, the number of the adjusting portions 50 relative to that of the clamping portions 40 is greater in the distal half portion than in the proximal half portion. Further, when the portion between the rear-end cutting edge 25' closest to the proximal end and the front-end cutting edge 25" closest to the distal end is seen as divided roughly equally into three portions, which include front, middle, and rear portions in this order from the distal end to the proximal end, the number of the adjusting portions 50 relative to that of the clamping portions 40 is larger in the middle portion than in the rear portion, and larger in the front portion than in the rear and middle portions. Furthermore, both the clamping portions 40 and the adjusting portions 50 are provided on the middle portion.

As described above, when the cutter assembly 20 is provided with the clamping portions 40, as appropriate, the upper and lower cutter supports 31 and 32 are integrated by means of the square tube-like spacers 44, so that the clamping portions 40 function like knots of bamboos, thereby allowing to increase the rigidity of the cutter assembly 20 as well as to reduce its weight. Thus, undesired bending during trimming operation can be suppressed, thereby improving the operability.

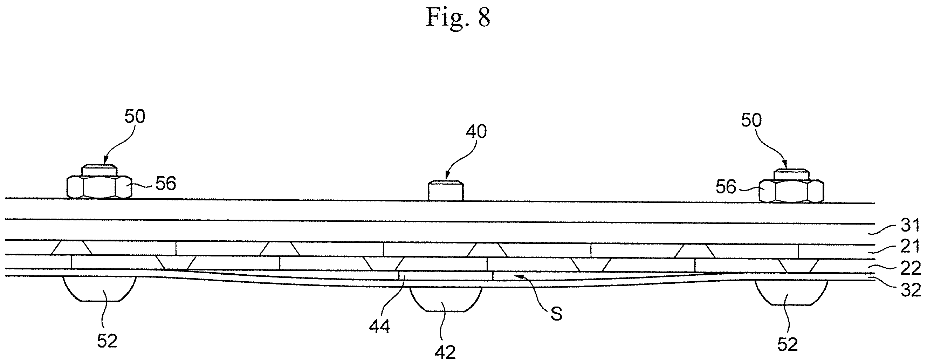

Further, since the adjusting portion 50 is provided between the adjacent clamping portions 40, as shown in FIG. 8, when the upper and lower cutters 21 and 22 are worn out in the thickness direction, widening the clearance S for sliding of the upper and lower cutters 21 and 22 excessively, and thus degrading the cutting performance of the cutters 21 and 22, it is only necessary to fasten the second bolt 52 of the adjusting portion 50 so as to deform the cutter supports 31 and 32, thereby reducing the separation distance between them. In that case, the second bolt 52 or a lock nut 56 of the adjusting portion 50 only needs to be fastened without disassembling the cutter assembly 20. Therefore, the adjustment of the separation distance between the upper and lower cutter supports 31 and 32 is simplified, thereby improving the operational efficiency and convenience.

Furthermore, when the portion between the rear-end cutting edge 25' closest to the proximal end and the front-end cutting edge 25" closest to the distal end is seen as divided roughly equally into three portions, the middle portion, in particular, is required to have both increased rigidity and capability of adjusting the separation distance between the cutter supports 31 and 32. In the cutter assembly 20 of the present embodiment, to address such requirements, a plurality of clamping portions 40 and adjusting portions 50 are provided on the middle portion.

Moreover, typically, the cutters 21 and 22 are worn out more heavily toward the distal end 20v, because during operation of the hedge trimmer 1, the distal end 20v side is adapted to pivot about the proximal end 20u or the distal end 20v side is more frequently used than the proximal end 20u side. Therefore, the separation distance between the cutter supports 31 and 32 is required to be more significantly reduced toward the distal end 20v. Meanwhile, the proximal end 20u side is required to have higher rigidity because insufficient rigidity on the proximal end 20u side may likely cause undesirably large bending. In the cutter assembly 20 of the present disclosure, the proximal end 20u side is provided with more clamping portions 40, while the distal end 20v side is provided with more adjusting portions 50. Therefore, the aforementioned requirements can be satisfied. Further, the distance between the adjacent clamping portions 40 is reduced on the proximal end 20u side to increase the rigidity, while the distance between the adjacent clamping portions 40 is increased on the distal end 20v side to mitigate the deformation of the cutter supports 31 and 32 when the separation distance is adjusted. Thus, the aforementioned requirements can be satisfied.

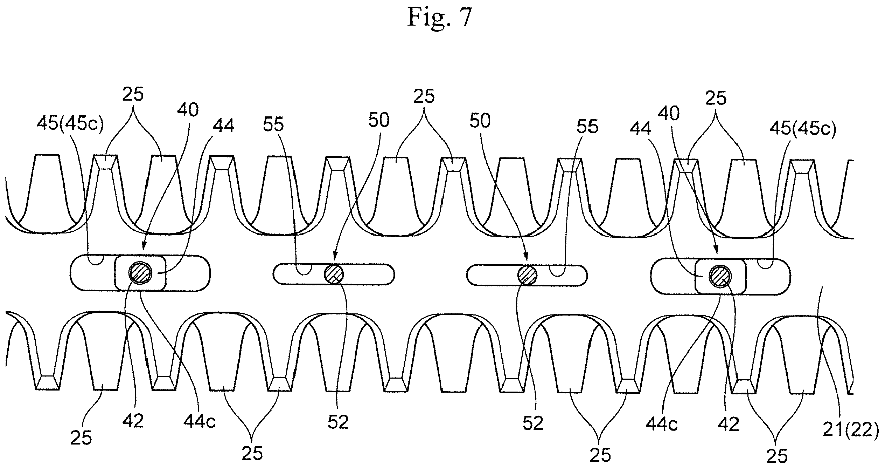

Further, as shown in FIG. 7, the square tube-like spacer 44 of each clamping portion 40 is provided such that its opposite left and right side surfaces 44c are slidably brought into surface contact with opposite inner periphery side surfaces 45c of each first slotted hole 45 provided in each of the cutters 21 and 22. Thus, abrasion of the second bolts 52 inserted into the second slotted holes 55 of the adjusting portions 50 as well as side-way movements of the cutters 21 and 22 can be suppressed, thereby improving the durability while maintaining excellent cutting performance.

Furthermore, the hedge trimmer 1 is often used for operations such as trimming hedges and cutting twigs at high locations, and is longer compared to a chain saw, for example. Therefore, it is important to reduce the weight of the hedge trimmer 1.

### [Variation of cutter assembly 20 of hedge trimmer 1]

Next, a variation of the cutter assembly 20 will be described.

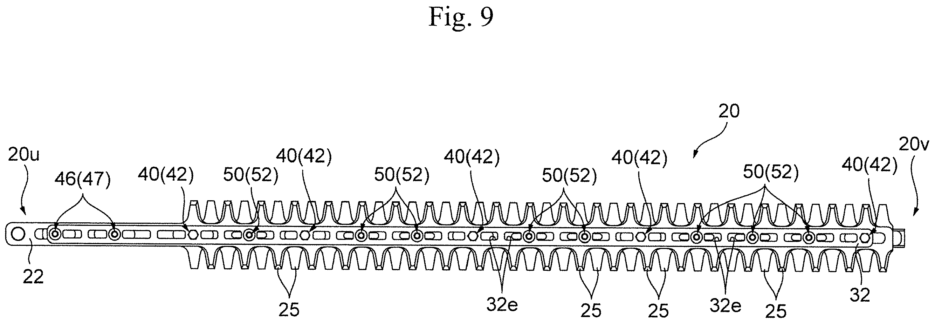

In the aforementioned embodiment, as shown in FIG. 3B, the head of the first bolt 42 of each clamping portion 40 and the head of the second bolt 52 of each adjusting portion 50 have the same shape. However, to avoid confusion between the clamping portion 40 and the adjusting portion 50 at the time of adjusting the separation distance D or performing maintenance inspection, for example, the shapes of the heads of the first and second bolts 42 and 52 may be differentiated as shown in FIG. 9 (in the example shown in FIG. 9, the shape of the head of the first bolt 42 is different from that of the aforementioned embodiment). Further, the outer diameters or the like of the first and second bolts 42 and 52 may be differentiated.

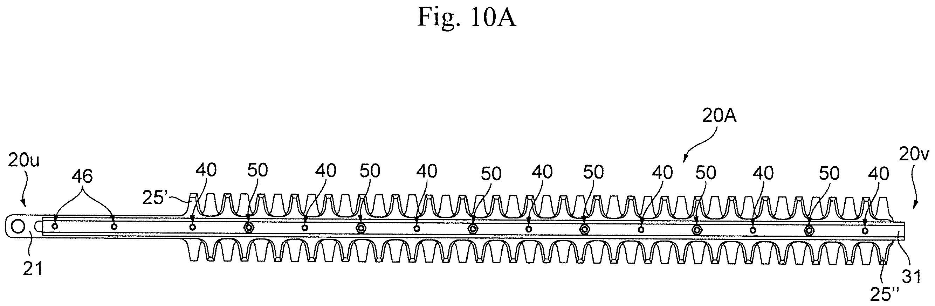

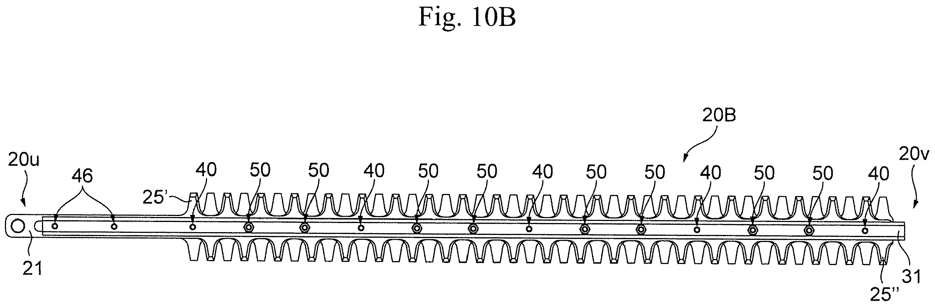

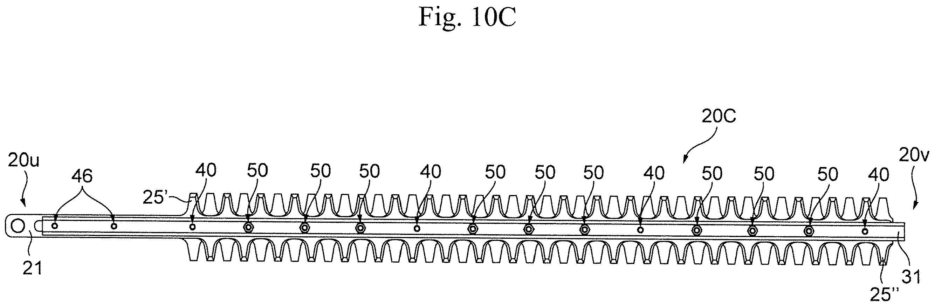

Furthermore, it is obvious that the arrangement pattern of the clamping portions 40 and the adjusting portions 50 of the cutter assembly 20 is not limited to that of the aforementioned embodiment. For example, the arrangement patterns shown in FIGS. 10A, 10B, and 10C may also be used. The clamping portions 40 and the adjusting portions 50 may thus be arranged in such a manner as to avoid confusion between them at the time of adjusting the separation distance D or performing maintenance inspection.

In a cutter assembly 20A shown in FIG. 10A, the clamping portions 40 and the adjusting portions 50 are alternately disposed such that the ratio of the number of the clamping portions 40 to that of the adjusting portions 50 is 1:1, with the clamping portions 40 positioned closest to the opposite ends.

In a cutter assembly 20B shown in FIG. 10B, the clamping portions 40 and the adjusting portions 50 are alternately disposed such that the ratio of the number of the clamping portions 40 to that of the adjusting portions 50 is 1:2, with the clamping portions 40 positioned closest to the opposite ends.

In the cutter assembly 20C shown in FIG. 10C, the clamping portions 40 and the adjusting portions 50 are alternately disposed such that the ratio of the number of the clamping portions 40 to that of the adjusting portions 50 is 1:3, with the clamping portions 40 positioned closest to the opposite ends.

Further, in the aforementioned embodiment, the upper and lower cutter supports 31 and 32 each have a length that covers substantially the entire length of each of the upper and lower cutters 21 and 22, but the cutter supports 31 and 32 may each have a length that partially covers each of the upper and lower cutters 21 and 22 (for example, the half portion from the proximal end 20u of each cutter).

Further, although the embodiment described above illustrates an example in which both the upper and lower cutters 21 and 22 operate, the present disclosure is also be applicable to a hedge trimmer in which one of the upper and lower cutters 21 and 22 does not operate, that is, one of the upper and lower cutters 21 and 22 is immovably secured to the corresponding cutter support 31 or 32, or one of the upper and lower cutters 21 and 22 is integrally formed with the corresponding cutter support 31 or 32.

### DESCRIPTION OF SYMBOLS

- 1: Hedge trimmer
- 20: Cutter assembly
- 20u: Proximal end
- 20v: Distal end
- 21: Upper cutter
- 22: Lower cutter
- 23: Elongated substrate
- 25: Cutting edge
- 25': Rear-end cutting edge
- 25": Front-end cutting edge
- 31: Upper cutter support
- 31a, 31b: Internal thread portion
- 32: Lower cutter support
- 32a, 32b: Through-hole
- 32e: Lightening hole
- 33: Bearing liner
- 33a, 33b: Through-hole
- 40: Clamping portion
- 42: First bolt
- 44: Square tube-like spacer (spacer)
- 44c: Opposite left and right side surfaces
- 45: First slotted hole
- 45c: Opposite inner periphery side surfaces
- 46: Clamping portion for attachment
- 47: Proximal-end bolt
- 48: Square tube-like spacer (spacer)
- 49: Proximal-end slotted hole
- 50: Adjusting portion
- 52: Second bolt
- 55: Second slotted hole
- 56: Lock nut
- D: Separation distance between upper and lower cutter supports
- T: Total thickness of upper and lower cutters

## Claims

1. A hedge trimmer comprising:
a cutter assembly including upper and lower cutters and upper and lower plate-like cutter supports, the upper and lower cutters having elongated substrates with their proximal ends positioned on a body housing with a drive source disposed therein, the elongated substrates being adapted to reciprocate in relatively opposite directions with respect to each other along a longitudinal direction, and the upper and lower plate-like cutter supports being integrated respectively in the longitudinal direction and extending respectively in the longitudinal direction so as to sandwich the upper and lower cutters therebetween to guide reciprocating relative motions of the upper and lower cutters while supporting the upper and lower cutters,
wherein:
projecting cutting edges provided at intervals on the elongated substrates of the upper and lower cutters are adapted to rub against each other,
to secure a separation distance between the upper and lower cutter supports, a plurality of clamping portions, each having a spacer and a first bolt, are provided at intervals on the upper and lower cutter supports of the cutter assembly, the spacer being adapted to be relatively slidably fitted and inserted into first slotted holes provided in the cutters so as to be interposed between the upper and lower cutter supports, and the first bolt being adapted to be inserted from one side of the upper and lower cutter supports, pass through the spacer fitted and inserted into the first slotted holes, and be screwed into a screw portion provided on another side of the upper and lower cutter supports so as to securely fasten the upper and lower cutter supports to the spacer, and
at least one adjusting portion is provided between the adjacent clamping portions, the adjusting portion having a second bolt, the second bolt being adapted to be inserted from the one side of the upper and lower cutter supports, pass through second slotted holes provided in the cutters, and be screwed into a screw portion on the other side of the upper and lower cutter supports so as to adjust the separation distance between the upper and lower cutter supports.

2. The hedge trimmer according to claim 1, wherein
in the cutter supports of the cutter assembly, when a portion between the cutting edge closest to a proximal end and the cutting edge closest to a distal end is seen as divided roughly equally in half into a proximal half portion and a distal half portion, the number of the adjusting portions relative to that of the clamping portions is greater in the distal half portion than in the proximal half portion.

3. The hedge trimmer according to claim 1, wherein
in the cutter supports of the cutter assembly, when a portion between the cutting edge closest to a proximal end and the cutting edge closest to a distal end is seen as divided roughly equally in half into a proximal half portion and a distal half portion, a distance between the adjacent clamping portions with the adjusting portion interposed therebetween is greater in the distal half portion than in the proximal half portion or is greater in the distal half portion than a distance between the adjacent clamping portions with no adjusting portion interposed therebetween.

4. The hedge trimmer according to any one of claims 1 to 3, wherein
in the cutter supports of the cutter assembly, when a portion between the cutting edge closest to a proximal end and the cutting edge closest to a distal end is seen as divided roughly equally into three portions, which include front, middle, and rear portions in this order from the distal end to the proximal end, the adjusting portion is provided on the middle portion.

5. The hedge trimmer according to any one of claims 1 to 3, wherein
in the cutter supports of the cutter assembly, when a portion between the cutting edge closest to a proximal end and the cutting edge closest to a distal end is seen as divided roughly equally into three portions, which include front, middle, and rear portions in this order from the distal end to the proximal end, the adjusting portion is provided on the front portion.

6. A hedge trimmer comprising:
a cutter assembly including upper and lower cutters and upper and lower plate-like cutter supports, the upper and lower cutters having elongated substrates with their proximal ends positioned on a body housing with a drive source disposed therein, the elongated substrates being adapted to reciprocate in relatively opposite directions with respect to each other along a longitudinal direction, and the upper and lower plate-like cutter supports being integrated respectively in the longitudinal direction and extending respectively in the longitudinal direction so as to sandwich the upper and lower cutters therebetween to guide reciprocating relative motions of the upper and lower cutters while supporting the upper and lower cutters,
wherein:
projecting cutting edges provided at intervals on the elongated substrates of the upper and lower cutters are adapted to rub against each other,
to secure a separation distance between the upper and lower cutter supports, the cutter assembly is provided with:
a clamping portion having a spacer and a first bolt, the spacer being adapted to be relatively slidably fitted and inserted into first slotted holes provided in the cutters so as to be interposed between the upper and lower cutter supports, and the first bolt being adapted to be inserted from one side of the upper and lower cutter supports, pass through the spacer fitted and inserted into the first slotted holes, and be screwed into a screw portion provided on another side of the upper and lower cutter supports so as to securely fasten the upper and lower cutter supports to the spacer, and
an adjusting portion having a second bolt, the second bolt being adapted to be inserted from the one side of the upper and lower cutter supports, pass through second slotted holes provided in the cutters, and be screwed into a screw portion on the other side of the upper and lower cutter supports so as to adjust the separation distance between the upper and lower cutter supports, and
in the cutter supports of the cutter assembly, when a portion between the cutting edge closest to a proximal end and the cutting edge closest to a distal end is seen as divided roughly equally in half into a proximal half portion and a distal half portion, the number of the adjusting portions relative to that of the clamping portions is greater in the distal half portion than in the proximal half portion.

7. The hedge trimmer according to claim 6, wherein
in the cutter supports of the cutter assembly, when the portion between the cutting edge closest to the proximal end and the cutting edge closest to the distal end is seen as divided roughly equally into three portions, which include front, middle, and rear portions in this order from the distal end to the proximal end, the clamping portion and the adjusting portion are provided on the middle portion.

8. The hedge trimmer according to claim 6, wherein
in the cutter supports of the cutter assembly, when the portion between the cutting edge closest to the proximal end and the cutting edge closest to the distal end is seen as divided roughly equally into three portions, which include front, middle, and rear portions in this order from the distal end to the proximal end, the number of the adjusting portions relative to that of the clamping portions is greater in the front portion than in the rear portion.

9. The hedge trimmer according to any one of claims 1 to 8, wherein one of the upper and lower cutters is immovably secured to the corresponding one of the upper and lower cutter supports.

10. The hedge trimmer according to any one of claims 1 to 8, wherein one of the upper and lower cutters is integrally formed with the corresponding one of the upper and lower cutter supports.

11. The hedge trimmer according to any one of claims 1 to 8, wherein the upper and lower cutter supports are integrated respectively in the longitudinal direction and extending respectively in the longitudinal direction so as to cover the upper and lower cutters substantially entirely across lengths of the upper and lower cutters.
